# EUROPEAN PATENT APPLICATION

(11) **EP 2 110 689 A1**
(43) Date of publication of application: **21.10.2009**
(21) Application number: 09157937.5
(22) Date of filing: 15.04.2009
(51) Int. Cl.: G02B 3/08, G02B 5/04, G02B 3/00, F21V 5/02, F21V 5/04, G02B 6/00

(54) **Light distribution board having improved grating structure including a plurality of light gratings each with multiple focuses**

(30) Priority: 18.04.2008 TW 97114183; 18.08.2008 TW 97131388
(71) Applicant: Taiwan Network Computer & Electronic Co., Ltd., Lu-Chou Taipei Hsien 247 (TW)
(72) Inventor: Chuang, Ping-Han, 247, Taipai Hsien (TW)
(74) Representative: Zipse Habersack Kritzenberger

(57) **Abstract**

A light distribution board having an improved light grating structure including a plurality of light refractive structures (1203,1204,1205,1206,1207) each with multiple focuses (1209,1211), the light distribution board is used on a light outputting surface of a lamp, in which at least a transparent board is provided on at least one of its surfaces with a plurality of light refractive structures each having multiple focuses, each light refractive structures having multiple focuses is composed of two or more arciform (concave or convex) lenses (1208,1210) and at least one lens with a non-arciform surface (1212) to form a light refractive structures having at least two focuses. With this structure, light beams can be uniformly distributed and can avoid the phenomenon of Gauss distribution that makes the area below the lamp especially bright, and avoid the phenomenon of dazzling of eyes during looking at the light emitting member in the lamp, and the light beams become more tender under the condition that lose of brightness is minimum.

## Description

### BACKGROUND OF THE INVENTION

### 1. Field of the Invention

The present invention relates to a light distribution board having an improved light grating structure including a plurality of light gratings each with multiple focuses; and especially to a light distribution board that can illuminate (by using the principles of optical reflection and refraction) a district with uniform brightness, tender light beams which are non dazzling under the condition of minimum lose of brightness of a lamp; the light distribution board is suitable to be applied to a place such as a house, an office, a factory or a road requiring illumination, and can achieve an effect of saving energy as well as avoiding the phenomenon of optical pollution.

### 2. Description of the prior art

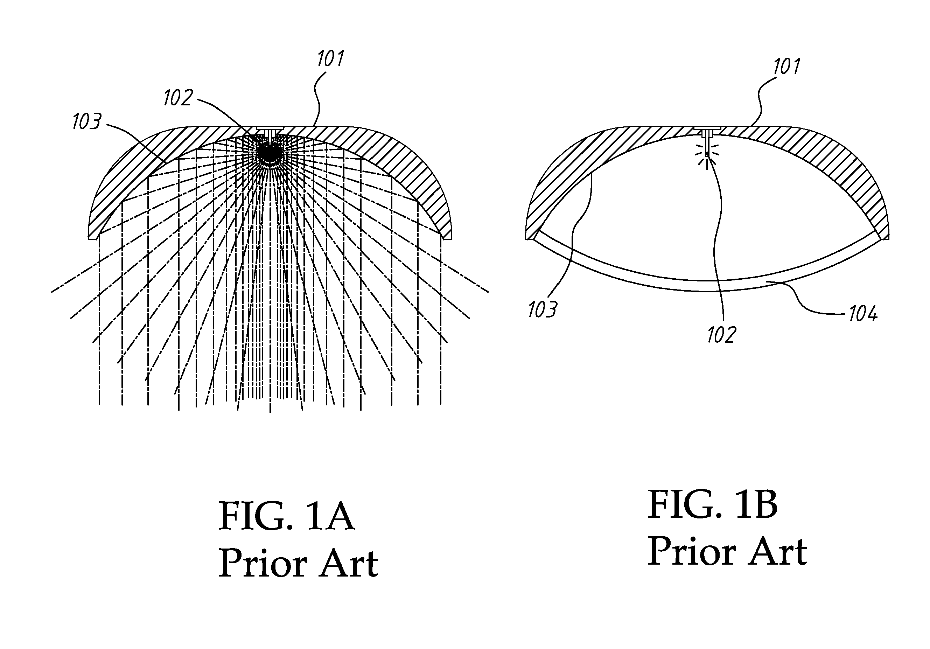

Illuminating lamps generally are divided in to two kinds including indoor and outdoor lamps; indoor lamps mainly are installed each with a half covering type obscured cover **101** (referring to Fig. 1A) having on an inner side thereof a reflective surface **103;** the light beams of the lamp include, in addition to those being directly irradiated from the lamp (light source), quite a large part of light beams being directly reflected from the reflective surface **103** and out of the lamp to a district to be illuminated. These lamps normally are treated by fogging process on the surface of the light source to avoid irradiating of light to eyes to result a phenomenon of making them feel dazzling and dizzy.

The outdoor lamps are mainly fully covering type covers (referring to Figs. 1B) in considering the factor of environment, they are mounted each therebeneath with a transparent hood **104,** the hood **104** is also treated by fogging process to avoid the phenomenon of dazzling of eyes during looking at the light source directly. The aforesaid two types have a common defect of losing much brightness by treatment by fogging process, these kinds of conventional lamps generally have the phenomenon of Gauss distribution so that brightness of lamps are concentrated at an area exactly below each lamp.

Light grating boards available presently we know include rhombic gratings and convex lens gratings.

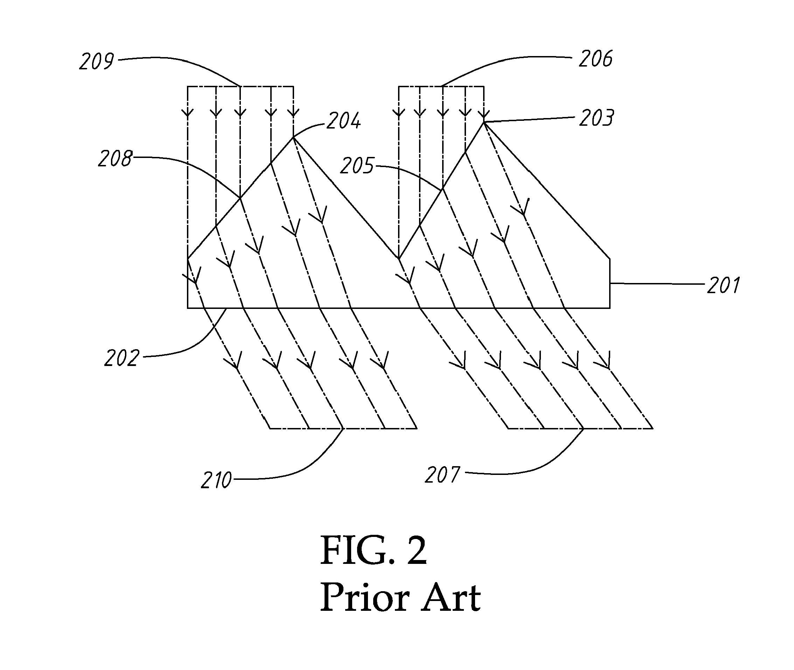

Referring to Fig. 2 depicting a conventional rhombic grating unit **201** of which the structure is more similar to that of the present invention, the rhombic grating unit **201** has a plane bottom surface **202,** and a top surface having a plurality of saw toothed gratings **203, 204,** the rhombic grating unit **201** is shaped from two straight bevel edges **205, 208** being oppositely disposed as mirror images for each other; several incident light beams **206** enter a bevel edge **205** of the saw toothed grating **203** in an identical incident angular direction to result a first time refraction, when the light beams **206** reach the plane surface **202,** they are once more refracted toward a district **207** to be illuminated; similarly, several incident light beams **209** enter a bevel edge **208** of the saw toothed grating **204** in an identical incident angular direction to result a first time refraction, when the light beams **209** reach the plane surface **202,** they are once more refracted toward a district **210** to be illuminated. We can see from the drawing that the light beams after being refracted from those incident light beams in an identical incident angular direction to the bevel edges **205, 208** or the plane surface **202** are always parallel to one another, i.e., there is no crossing and diffusing effect, the light beams arriving at the districts to be illuminated form partial gathering light beams, and they are unable to get an effect of uniformly distributing.

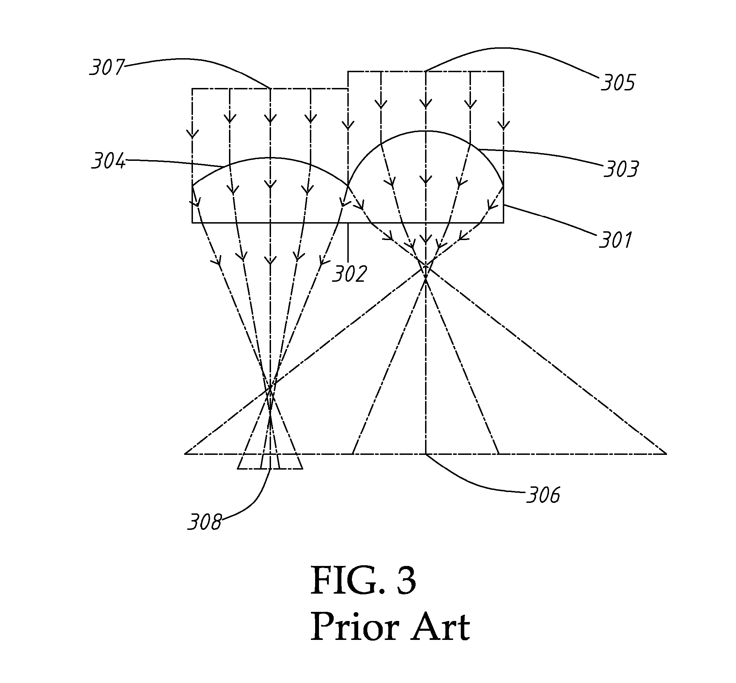

Referring to Fig. 3 which is depicted with another conventional convex lens grating unit **301** of which the structure is also more similar to that of the present invention, the convex lens grating unit **301** has a plane bottom surface **302,** and a top surface having a plurality of convex lenses gratings **303, 304.** Several incident light beams **305** enter the convex lens grating **303** in an identical incident angular direction to result a first time refraction, when the light beams **305** reach the plane surface **302,** they are once more refracted toward a district **306** to be illuminated; similarly, several incident light beams **307** enter the convex lens grating **304** in an identical incident angular direction to result a first time refraction, when the light beams **307** reach the plane surface **302,** they are once more refracted toward a district **308** to be illuminated. We can see from the drawing that the light beams after being irradiated to the two convex lens gratings **303, 304** in an identical incident angular direction will create refractions in different angular directions, wherein the convex lens grating **304** of a smaller curvature has a longer focus, the light beams after being refracted from the convex lens grating **304** cross at the focus, they form a narrower illuminated range at the district **308;** the other convex lens grating **303** of a larger curvature has a shorter focus, the light beams after being refracted from the convex lens grating **303** cross at the focus, they form a wider illuminated range at the district **306.** If the convex lens grating unit **301** is applied for light distribution, two defects as list below will be induced: firstly all light beams will gather at an area exactly below the convex lens grating unit **301,** their distances of irradiation are short and they are unable to get an effect of having a wide illuminated range; and secondly, the light beams are highly overlapped with one another and are subjected to resulting the phenomenon of Gauss distribution, and are unable to get an effect of uniformly distributing.

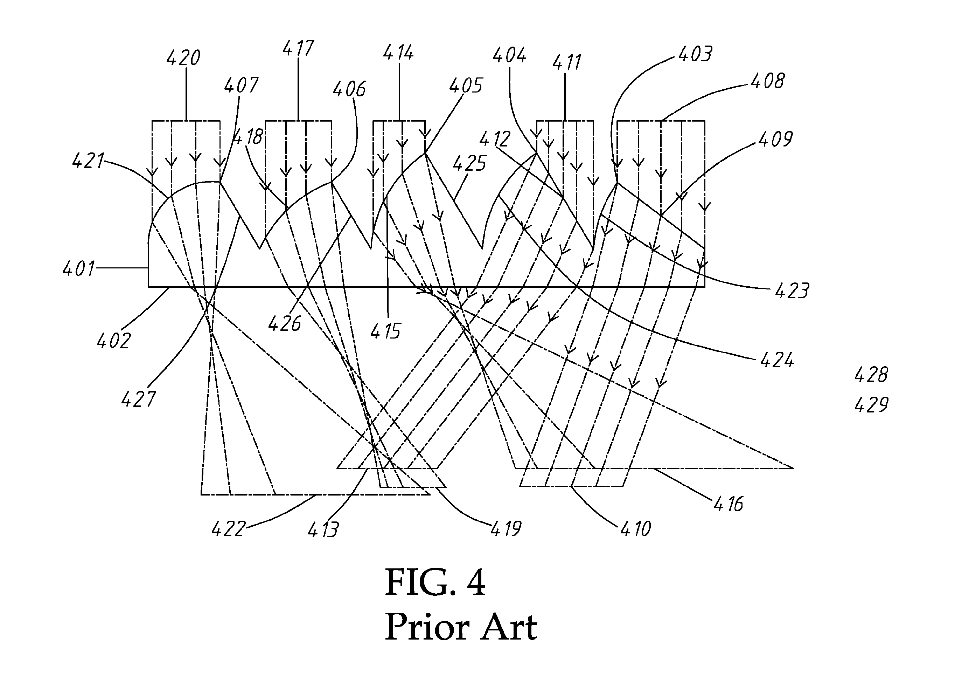

Referring to Fig. 4 which shows a structure having a light distribution grating unit **401** having a plurality of saw tooth shaped gratings invented by the inventor of the present invention and having been filed as a Taiwan patent application with a filing no. 96140922; in which the light distribution grating unit **401** with multiple saw tooth shaped (gratings) has a plane bottom surface **402,** and a top surface having a plurality of saw tooth shaped (gratings) **403, 404, 405, 406** and **407** each being composed of an arciform surface and a straight inclined surface (non-arciform surface), summarily, here we see a kind of arciform surface and a kind of non-arciform surface of which the saw tooth shaped (grating) **403** is composed of a convex lens (arciform surface) **423** and a straight inclined surface (non-arciform surface) **409**.Several incident light beams **408** enter the straight inclined surface (non-arciform surface) **409** of the saw tooth shaped (grating) **403** to result a first time refraction, when the light beams **408** reach the plane surface **402,** they are once more refracted down and leftwards toward a district **410** to be illuminated ,the saw tooth shaped (grating) **404** is composed of a convex lens (arciform surface) **424** and a straight inclined surface (non-arciform surface) **412;** similarly; several incident light beams **411** enter the straight inclined surface **412** of the saw tooth shaped (grating) **404** to result a first time refraction, when the light beams **411** reach the plane surface **402,** they are once more refracted down and leftwards toward a district **413** to be illuminated; and more, several incident light beams **414** enter a convex lens (arciform surface) **415** of the saw tooth shaped (grating) **405** to result a first time refraction, when the light beams **415** reach the plane surface **402,** they are once more refracted down and rightwards toward a district **416** to be illuminated ,the saw tooth shaped (grating) **406** is composed of a convex lens (arciform surface) **418** and a straight inclined surface (non-arciform surface) **426;** and several incident light beams **417** enter an arciform surface **418** of the saw tooth shaped (grating) **406** to result a first time refraction, when the light beams **417** reach the plane surface **402,** they are once more refracted down and rightwards toward a district **419** to be illuminated the saw tooth shaped (grating) **407** is composed of a convex lens (arciform surface) **421** and a straight inclined surface (non-arciform surface) **427;** and several incident light beams **420** enter a convex lens (arciform surface) **421** of the saw tooth shaped (grating) **407** to result a first time refraction, when the light beams **420** reach the plane surface **402,** they are once more refracted down and rightwards toward a district **422** to be illuminated; We can see from the drawing that the light beams **411** after being irradiated to the straight inclined surface (non-arciform surface) **412** having larger inclination angles in an identical incident angular direction will create larger refraction angles, i.e., the district **422** to be illuminated is farther right below the lamp; on the contrary, the light beams **408** after being irradiated to the straight inclined surface **409** having smaller inclination angles in an identical incident angular direction will create smaller refraction angles, i.e., the district **422** to be illuminated is nearer right below the lamp; the above two groups of light beams **411, 408** respectively are all parallel without crossing and diffusion, the light beams **411, 408** reaching the district **422** to be illuminated are in partially concentrated forms; the incident light beams **414** in an identical incident angular direction entering the arciform surface **415** (having same curvature but larger inclination angle) will create larger refraction angles and crossing state, i.e., the district **416** to be illuminated is farther right below the lamp, and the range of illumination in it is wider; on the contrary, the light beams **417** in an identical incident angular direction entering the convex lens (arciform surface) **418** (having same curvature but smaller inclination angle) will create smaller refraction angles and crossing state, i.e., the district **419** to be illuminated is nearer right below the lamp, and the range of illumination in it is narrower; the convex lenses (arciform surfaces) **415, 418** are arciform surfaces with same inclination angle but different curvatures; the light beams **420** in an identical incident angular direction entering the convex lens (arciform surface) **421** (having a larger curvature) cross at a focus with a shorter distance after refraction to result a wider range of illumination; on the contrary, the light beams **417** in an identical incident angular direction entering the convex lens (arciform surface) **418** (having a smaller curvature) cross at a focus with a longer distance after refraction result a narrower range of illumination.

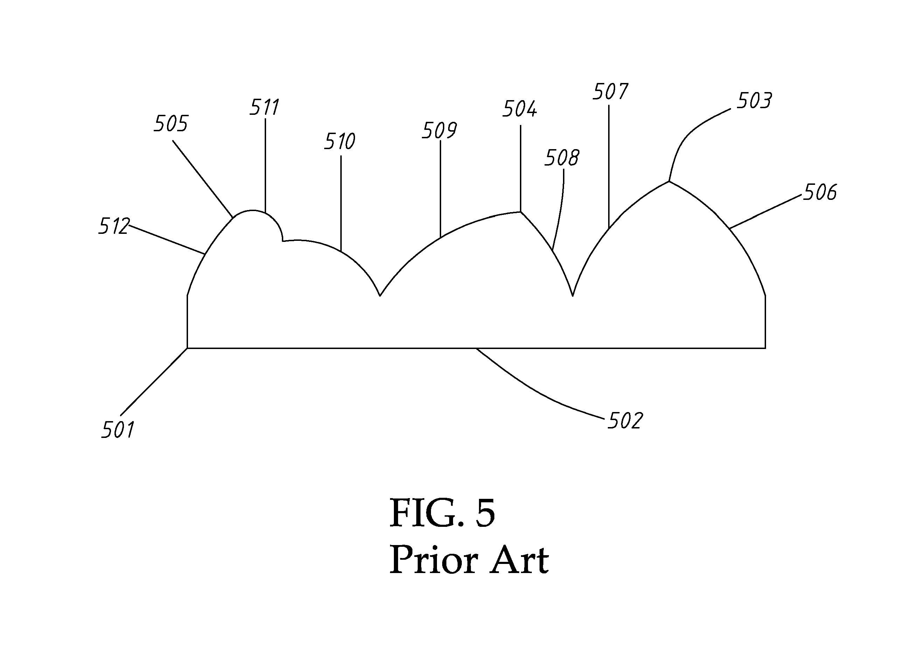

Referring to Fig. 5, which shows a light distribution board structure having a plurality of gratings (each with multiple focuses) composed of at least two convex lenses also invented by the inventor of the present invention and having been filed as a US patent application with a filing no. 12/174,534; in which the light grating **501** with multiple focuses has a plane bottom surface **502,** and a top surface having a plurality of light gratings **503, 504** and **505** each with multiple focuses, wherein the light grating **503** with multiple focuses is composed of two convex lenses (arciform surfaces) **506, 507** of same curvature and size, the light grating **504** with multiple focuses is composed of two convex lenses (arciform surfaces) **508, 509** of same curvature but different sizes, the light grating 505 with multiple focuses is composed of three convex lenses (arciform surfaces) **510, 511** and **512** of different curvatures and different sizes; wherein curvature and size of each convex lens (arciform surface)are changed in pursuance of the angles of refraction of the light beams and the range being illuminated.

### SUMMARY OF THE INVENTION

In order to get rid of the defects of the conventional lamps, the present invention provided a light distribution board having an improved light grating structure including a plurality of light gratings each with multiple focuses, the light distribution board can be mounted at a light outputting surface of a conventional lamp to control the refraction angular directions of most of the light beams of the lamp, so that the light beams can irradiate a predetermined district to be illuminated to get an effect of uniformly distributing. At least a transparent board is provided on its top surface with a plurality of light gratings each having multiple focuses, each light grating having multiple focuses is composed of two or more concave or convex lenses and at least one lens each with a non-arciform surface, to form a convex lens grating having two or more focuses; these light gratings with multiple focuses are strip like light gratings; the top surface is a light receiving surface of the lamp. The bottom surface of the transparent board can be a plane surface or is formed thereon a plurality of normal convex lenses, an arciform surface or a surface formed thereon a plurality of normal convex lenses, and the bottom surface is an illuminating surface of the lamp. With such a structure, light beams can be uniformly distributed and can avoid the phenomenon of Gauss distribution that makes the area below the lamp especially bright, and can avoid the phenomenon of dazzling of eyes during looking at the light emitting member in the lamp, and the light beams become more tender under the condition that lose of brightness is minimum.

Moreover, the light distribution board having an improved light grating structure provided in the present invention can be formed on a top surface of a transparent board a plurality of light gratings each having multiple focuses, each light grating having multiple focuses is composed of two or more concave or convex lenses and at least one lens each with a non-arciform surface to form a light grating unit having two or more focuses; these light gratings with multiple focuses are annular light gratings; the top surface is a light receiving surface of the lamp. The bottom surface of the transparent board can be a plane surface or a surface formed thereon a plurality of normal convex lenses, and the bottom surface is an illuminating surface of the lamp.

Further, the light distribution board having an improved light grating structure provided in the present invention can be formed on a top surface of a transparent board a plurality of light gratings each having multiple focuses, each light grating having multiple focuses is composed of two or more concave or convex lenses and at least one lens each with a non-arciform surface to form a convex lens grating having two or more focuses; these light gratings with multiple focuses are light gratings in shapes of clouds; the top surface is a light receiving surface of the lamp. The bottom surface of the transparent board can be a plane surface or a surface formed thereon a plurality of normal convex lenses, and the bottom surface is an illuminating surface of the lamp.

In a light distribution board having an improved light grating structure provided in the present invention, curvature and inclination angle of each concave or convex lens of a light grating having multiple focuses and inclination angle of the aforesaid at least one lens each with a non-arciform surface are changed in pursuance of the angles of refraction of the incident light beams through the lens surfaces. While curvature of every normal convex lens and the inter-lens distance between every two normal convex lenses are changed in pursuance of the angles of refraction of the incident light beams through the lens surfaces. Thereby light beams in a lamp can be refracted toward a small area of the district to be illuminated, thus light beams can be uniformly distributed and can avoid the phenomenon of Gauss distribution that makes the area below the lamp especially bright.

The light distribution board having an improved light grating structure provided in the present invention can be further improved, namely, partial areas of the bottom surface of the transparent board can be formed a plurality of normal convexes; and partial areas can be formed a plurality of convex lens gratings with multiple focuses. With such a structure, a wider illuminated range can be provided, light beams can be uniformly distributed, the phenomenon of dazzling of eyes during looking at the light emitting member in the lamp can be avoided, and the light beams become more tender under the condition that lose of brightness is minimum.

The present invention will be apparent in its structure and principle after reading the detailed description of the preferred embodiment thereof in reference to the accompanying drawings.

### BRIEF DESCRIPTION OF THE DRAWINGS

Fig. 1A is a schematic sectional view of a conventional half covering type illumination lamp;
Fig. 1B is a schematic sectional view of a conventional fully covering type illumination lamp;
Fig. 2 is a schematic view showing the light beam progressing of a conventional rhombic grating structure;
Fig. 3 is a schematic view showing the light beam progressing of a conventional convex lens grating;
Fig. 4 is a schematic view showing a light grating structure having a plurality of saw toothed lenses;
Fig. 5 shows a light grating structure composed of at least two convex lenses (at least with two focuses);
Figs. 6, 6A show a light grating having multiple focuses of the present invention being composed of two convex lenses and a non-arciform surface;
Figs. 7, 7A show a light grating having multiple focuses of the present invention also being composed of two convex lenses and a non-arciform surface;
Figs. 8, 8A show a light grating having multiple focuses of the present invention being composed of two convex lenses and two non-arciform surfaces;
Figs. 9, 9A show a light grating having multiple focuses of the present invention also being composed of two convex lenses and two non-arciform surfaces;
Figs. 10, 10A show a light grating having multiple focuses of the present invention being composed of three convex lenses and a non-arciform surfaces;
Figs. 11, 11A show a light grating having multiple focuses of the present invention being composed of two convex lenses and three non-arciform surfaces;
Fig. 12 is an enlarged schematic view showing a light distribution board of the present invention having an improved light grating structure with a plurality of light gratings each having multiple focuses;
Figs. 13, 13A and 13B are plane views of a first embodiment of a light distribution board of the present invention having an improved light grating structure with a plurality of light gratings each having multiple focuses;
Figs. 14, 14A and 14B are plane views of a second embodiment of a light distribution board of the present invention having an improved light grating structure with a plurality of light gratings each having multiple focuses;
Figs. 15, 15A and 15B are plane views of a third embodiment of a light distribution board of the present invention having an improved light grating structure with a plurality of light gratings each having multiple focuses;
Figs. 16, 16A and 16B are plane views of a fourth embodiment of a light distribution board of the present invention having an improved light grating structure with a plurality of light gratings each having multiple focuses;
Figs. 17, 17A and 17B are plane views of a fifth embodiment of a light distribution board of the present invention having an improved light grating structure with a plurality of light gratings each having multiple focuses;
Figs. 18 and 18A are plane views of a sixth embodiment of a light distribution board of the present invention; the present invention having an improved light grating structure with a plurality of light gratings each having multiple focuses;
Figs. 19, 19A are plane views of a seventh embodiment of a light distribution board of the present invention having an improved light grating structure with a plurality of light gratings each having multiple focuses;
Figs. 20, 20A and 20B are plane views of a eighth embodiment of a light distribution board of the present invention having an improved light grating structure with a plurality of light gratings each having multiple focuses;
Figs. 21, 21A and 21B are plane views of a ninth embodiment of a light distribution board of the present invention having an improved light grating structure with a plurality of light gratings each having multiple focuses;
Figs. 22, 22A and 22 B are plane views of a tenth embodiment of a light distribution board of the present invention having an improved light grating structure with a plurality of light gratings each having multiple focuses;
Figs. 23, 23A and 23B are plane views of a eleventh embodiment of a light distribution board of the present invention having an improved light grating structure with a plurality of light gratings each having multiple focuses;
Figs. 24 and 24A are plane views of a twelfth embodiment of a light distribution board of the present invention having an improved light grating structure with a plurality of light gratings each having multiple focuses;
Fig. 25 is a sectional view showing an embodiment of which at least a side of a transparent board of the present invention is used to form a light distribution board having a plurality of light gratings each with multiple focuses and is applied to a lamp;
Fig. 26 is a sectional view showing another embodiment of which at least a side of a transparent board of the present invention is used to form a light distribution board having a plurality of light gratings each with multiple focuses and is applied to a lamp;
Figs. 27, 27A show a light grating having multiple focuses of the present invention being composed of two concave lenses and a non-arciform surface;
Figs. 28, 28A show another light grating having multiple focuses of the present invention being composed of two concave lenses and a non-arciform surface;
Figs. 29, 29A show a light grating having multiple focuses of the present invention being composed of two concave lenses and two non-arciform surfaces;
Figs. 30, 30A show a light grating having multiple focuses of the present invention being composed of a convex lens, a concave lens and a non-arciform surface;
Figs. 31, 31A show another light grating having multiple focuses of the present invention being composed of t a convex lens, a concave lens and a non-arciform surface;
Figs. 32, 32A show a light grating having multiple focuses of the present invention being composed of a convex lens, a concave lens and two non-arciform surfaces.

### DETAILED DESCRIPTION OF THE PREFERRED EMBODIMENT

The present invention relates a light distribution board having an improved light grating structure with multiple focuses, in which at least a transparent board is used to form the light distribution board as an illuminating cover for a lamp. The transparent board can be in the shape of rectangular, circle, elliptical or strange shape; the material for the transparent board can be transparent plastics, transparent glass or some other transparent material. The transparent board is formed on at least one side thereof a plurality of light gratings each having multiple focuses, each of the light gratings having multiple focuses is composed of two or more convex lenses and at least one lens each with a non-arciform surface to form a convex lens grating having two or more focuses, curvature and inclination angle of each convex lens and inclination angle of the aforesaid at least one lens each with a non-arciform surface are changed in pursuance of the angles of refraction of the incident light beams through the lens surfaces.

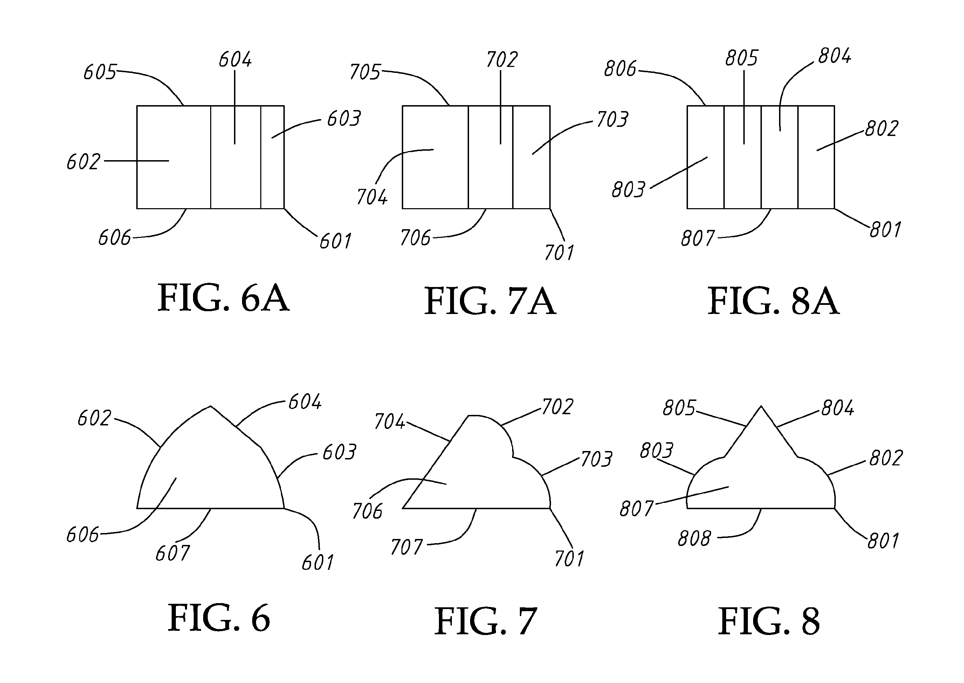

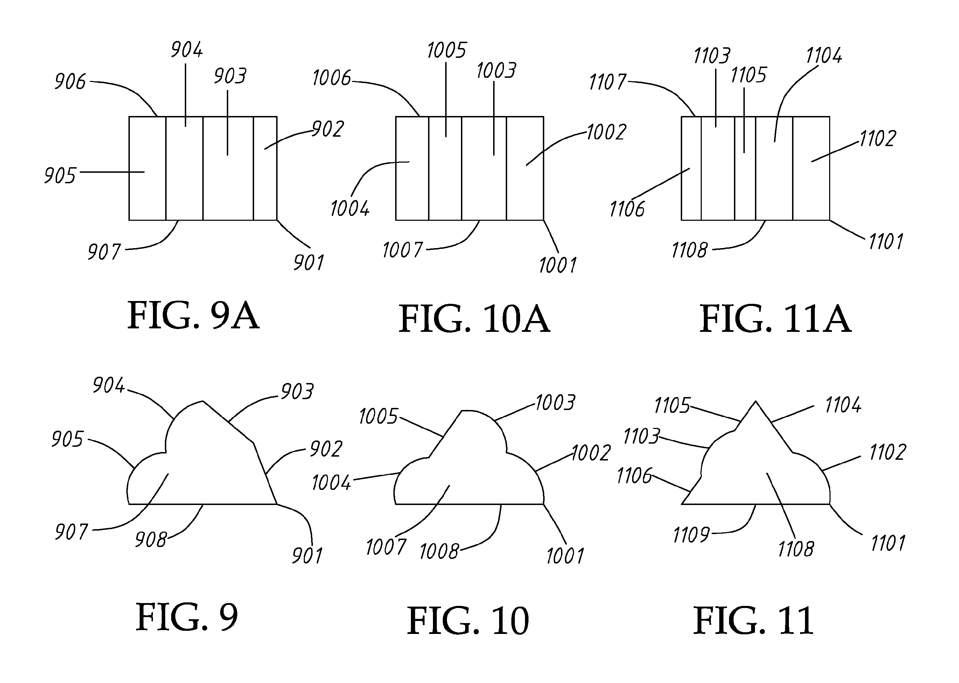

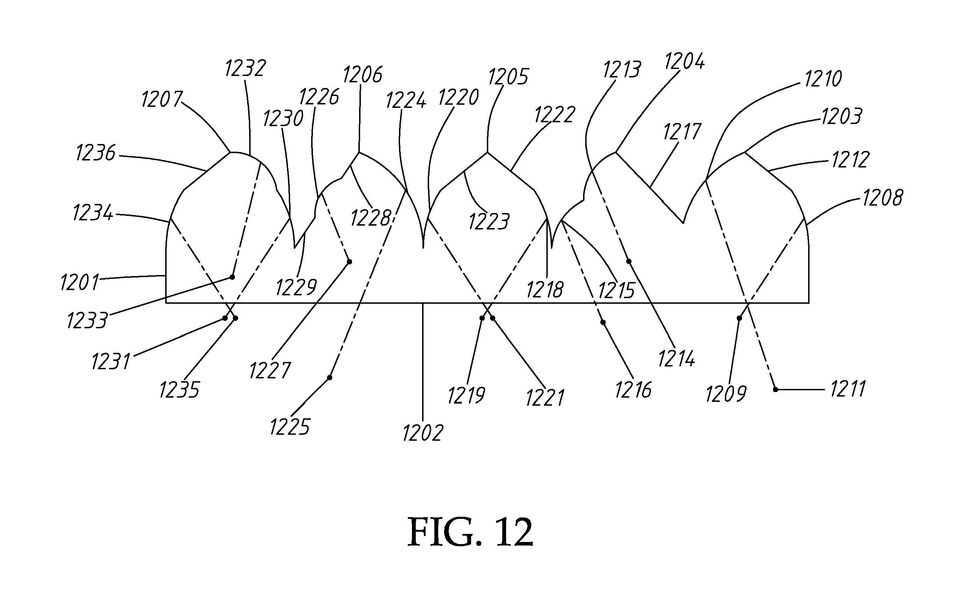

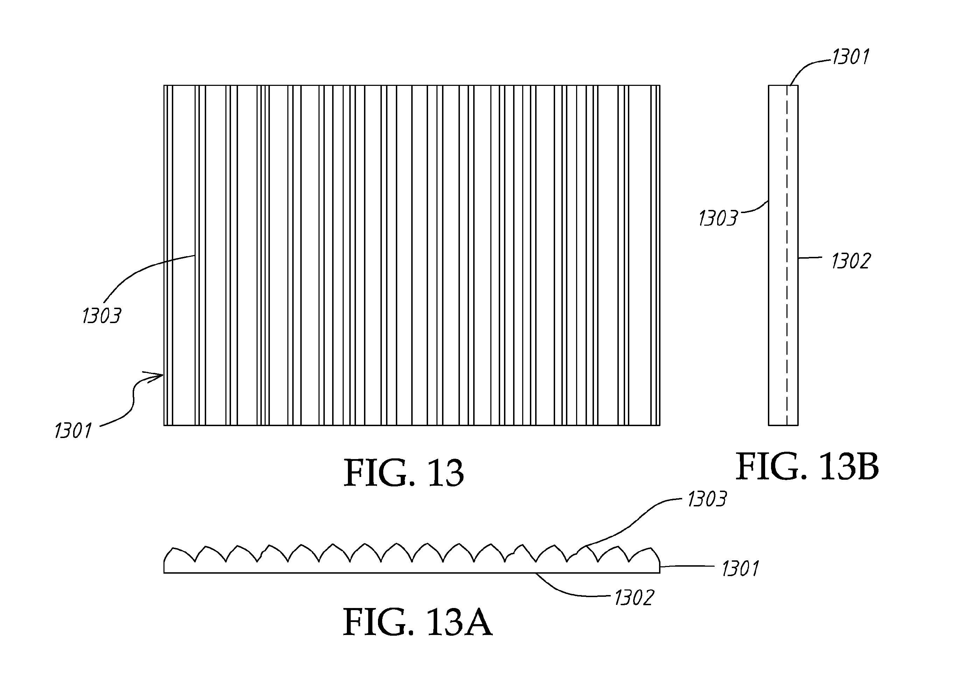

The present invention is described with many embodiments below:
The light gratings having multiple focuses in strip, annular, cloud or granular shapes formed from the transparent boards of the present invention are chosen from the following various structures:
   1. Referring to Figs. 6 and 6A, in the drawings, a light grating **602** having multiple focuses is composed of two convex lenses **602** and **603** and a lens with a non-arciform surface **604,** and there are two surfaces **605, 606** which are vertical surfaces of the front and the rear sides respectively of the light grating **601** which is strip like, cloud shaped or annular, and a bottom surface **607** of the light grating **601** having multiple focuses is a plane surface.
   2. Referring to Figs. 7 and 7A, in the drawings, a light grating **701** having multiple focuses is composed of two convex lenses **702,** and **703** and a lens with a non-arciform surface **704,** and there are two surfaces **705** and **706** which are vertical surfaces of the front and the rear sides respectively of the light grating **701** which is strip like, cloud shaped or annular, and a bottom surface **707** of the light grating **701** having multiple focuses is a plane surface.
   3. Referring to Figs. 8 and 8A, in the drawings, a light grating **801** having multiple focuses is composed of two convex lenses **802** and **803** and two lenses each with a non-arciform surface **804, 805** and there are two surfaces **806, 807** which are vertical surfaces of the front and the rear sides respectively of the light grating **801** which is strip like, cloud shaped or annular, and a bottom surface **808** of the light grating **801** having multiple focuses is a plane surface.
   4. Referring to Figs. 9 and 9A, in the drawings, a light grating **901** having multiple focuses is composed of two convex lenses **904** and **905** and two lenses each with a non-arciform surface **802, 803,** and there are two surfaces **906, 907** which are vertical surfaces of the front and the rear sides respectively of the light grating **901** which is strip like, cloud shaped or annular, and a bottom surface **908** of the light grating **901** having multiple focuses is a plane surface.
   5. Referring to Figs. 10 and 10A, in the drawings, a light grating **1001** having multiple focuses is composed of three convex lenses **1002, 1003** and **1004** and a lens with a non-arciform surface **1005,** and there are two surfaces **1006, 1007** which are vertical surfaces of the front and the rear sides respectively of the light grating **1001** which is strip like, cloud shaped or annular, and a bottom surface **1008** of the light grating **1001** having multiple focuses is a plane surface.
   6. Referring to Figs. 11 and 11A, in the drawings, a light grating **1101** having multiple focuses is composed of two convex lenses **1102, 1103** and three lenses each with a non-arciform surface **1104, 1105** and **1106,** and there are two surfaces **1107, 1108** which are vertical surfaces of the front and the rear sides respectively of the light grating **1101** which is strip like, cloud shaped or annular, and a bottom surface **1108** of the light grating **1101** having multiple focuses is a plane surface.
By virtue that there are many kinds of light grating structures composed of convex lenses, here we summarily list the above six kinds of composed structures, generally speaking, a convex lens grating having two or more convex lenses and at least one lens each with a non-arciform surface, and being in strip, cloud, or annular shapes all fall in the scope of the light gratings with multiple focuses formed from the transparent boards of the present invention.
Referring to Fig. 12 which is an enlarged schematic view showing a light distribution board **1201** having an improved light grating structure with a plurality of light gratings each having multiple focuses and in strip, annular, cloud or granular shapes presented in partial sectional view of the present invention; in the drawing, a bottom surface **1202** of the light distribution board **1201** is a plane surface, and the top surface of the light distribution board **1201** is formed thereon a plurality of light gratings (having multiple focuses) **1203, 1204, 1205, 1206** and **1207,** wherein the light grating (having multiple focuses) **1203** is composed of two convex lenses **1208, 1210** and a non-arciform surface **1212;** the convex lens **1208** having multiple focuses has a focus **1209,** the other convex lens **1210** has a focus **1211;** the light gratings **1204** is composed of two convex lenses **1213, 1215** and a non-arciform surface **1217;** the convex lens **1213** having multiple focuses has a focus **1214,** the other convex lens **1215** has a focus **1216;** the convex lens **1205** having multiple focuses is composed of two convex lenses **1218, 1220** and two non-arciform surfaces **1222, 1223,** the convex lens **1220** has a focus **1221,** the convex lens **1206** having multiple focuses is composed of two convex lenses **1224, 1226** and two non-arciform surfaces **1228, 1229,** of which the convex lens **1224** has a focus **1225,** the other convex lens **1226** has a focus **1227;** the convex lens **1207** having multiple focuses is composed of three convex lenses **1230, 1232, 1234** and a non-arciform surface **1236,** the convex lens **1230** has a focus **1231,** the convex lens **1232** has a focus **1233,** and the convex lens **1234** has a focus **1235.**
Referring to Figs. 13, 13A and 13B which are plane views of a first embodiment of light distribution board having an improved light grating structure with a plurality of light gratings each having multiple focuses of the present invention, in the drawings, a bottom surface **1302** of a transparent board **1301** is a plane surface, and a top surface of the transparent board **1301** is formed thereon a plurality of strip like light gratings **1303** each having multiple focuses. The curvature and inclination angle of each convex lens of the strip like light gratings **1303** having multiple focuses and the inclination angle of each of the aforesaid lenses with a non-arciform surface are changed in pursuance of the angles of refraction of the incident light beams through the lens surfaces.

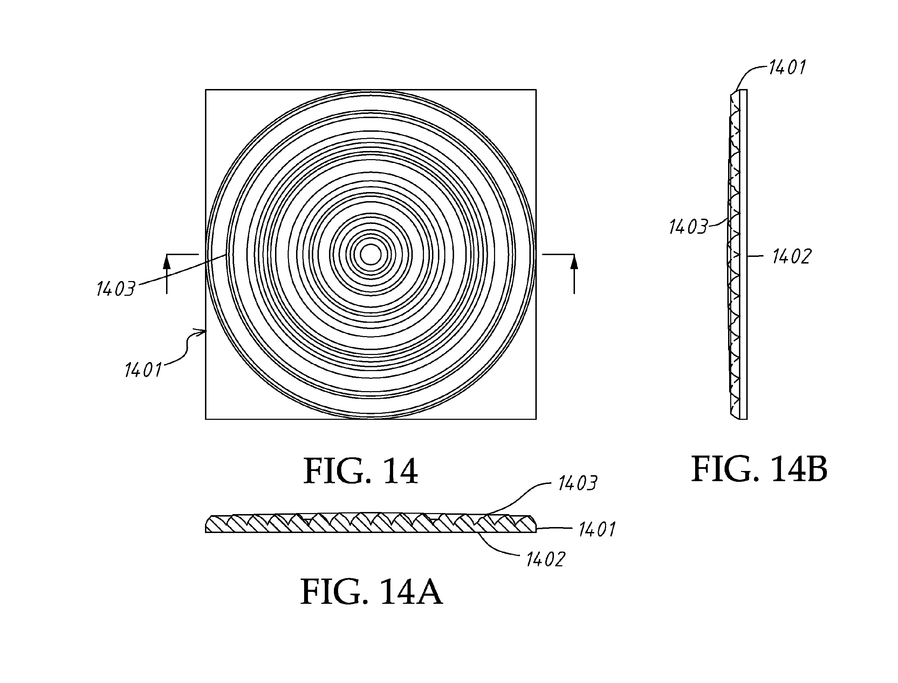

Referring to Figs. 14, 14A and 14B which are plane views of a second embodiment of light distribution board having an improved light grating structure with a plurality of light gratings each having multiple focuses of the present invention, in the drawings, a bottom surface **1402** of a transparent board **1401** is a plane surface, and a top surface of the transparent board **1401** is formed thereon a plurality of annular light gratings **1403** each having multiple focuses. The curvature and inclination angle of each convex lens of the annular light gratings **1403** having multiple focuses and the inclination angle of each of the aforesaid lenses with a non-arciform surface are changed in pursuance of the angles of refraction of the incident light beams through the lens surfaces.

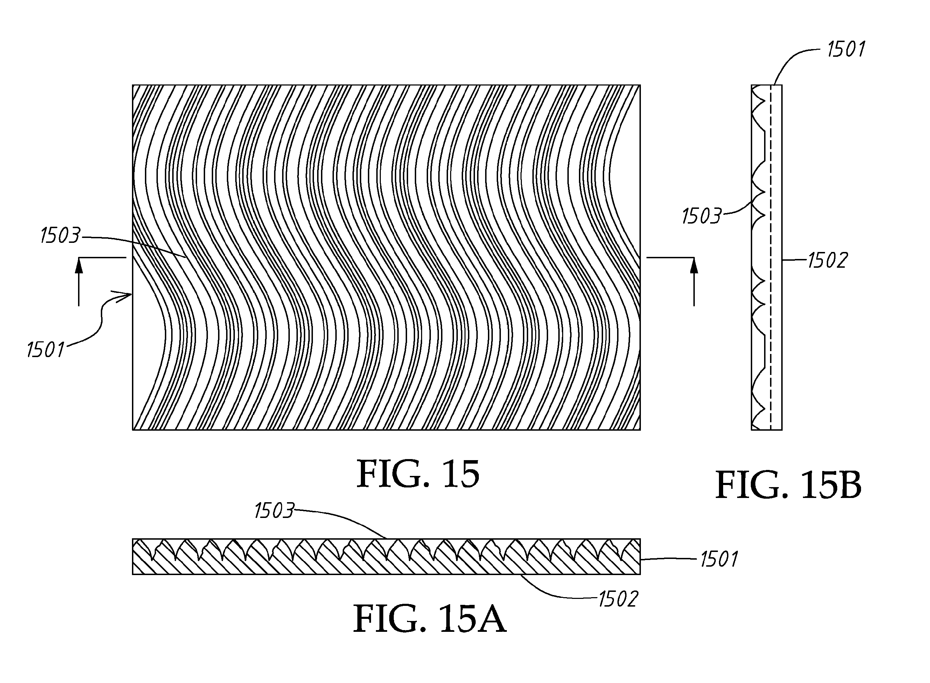

Referring to Figs. 15, 15A and 15B which are plane views of a third embodiment of light distribution board having an improved light grating structure with a plurality of light gratings each having multiple focuses of the present invention, in the drawings, a bottom surface **1502** of a transparent board **1501** is a plane surface, and a top surface of the transparent board **1501** is formed thereon a plurality of cloud shaped light gratings **1503** each having multiple focuses. The curvature and inclination angle of each convex lens of the cloud shaped light gratings **1503** having multiple focuses and the inclination angle of each of the aforesaid lenses with a non-arciform surface are changed in pursuance of the angles of refraction of the incident light beams through the lens surfaces.

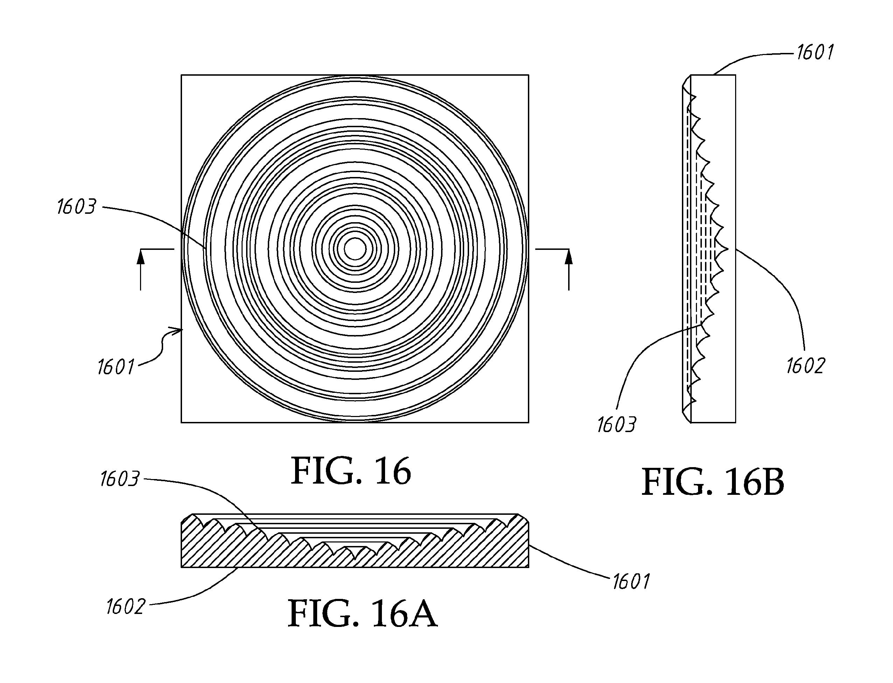

Referring to Figs. 16, 16A and 16B which are plane views of a fourth embodiment of light distribution board having an improved light grating structure with a plurality of light gratings each having multiple focuses of the present invention, in the drawings, a bottom surface **1602** of a transparent board **1601** is a plane surface, and a top surface of the transparent board **1601** is formed thereon a plurality of annular light gratings **1603** each having multiple focuses. These annular light gratings **1603** having multiple focuses are arranged in steps. The curvature and inclination angle of each convex lens of the annular light gratings **1603** having multiple focuses and the inclination angle of each of the aforesaid lenses with a non-arciform surface are changed in pursuance of the angles of refraction of the incident light beams through the lens surfaces.

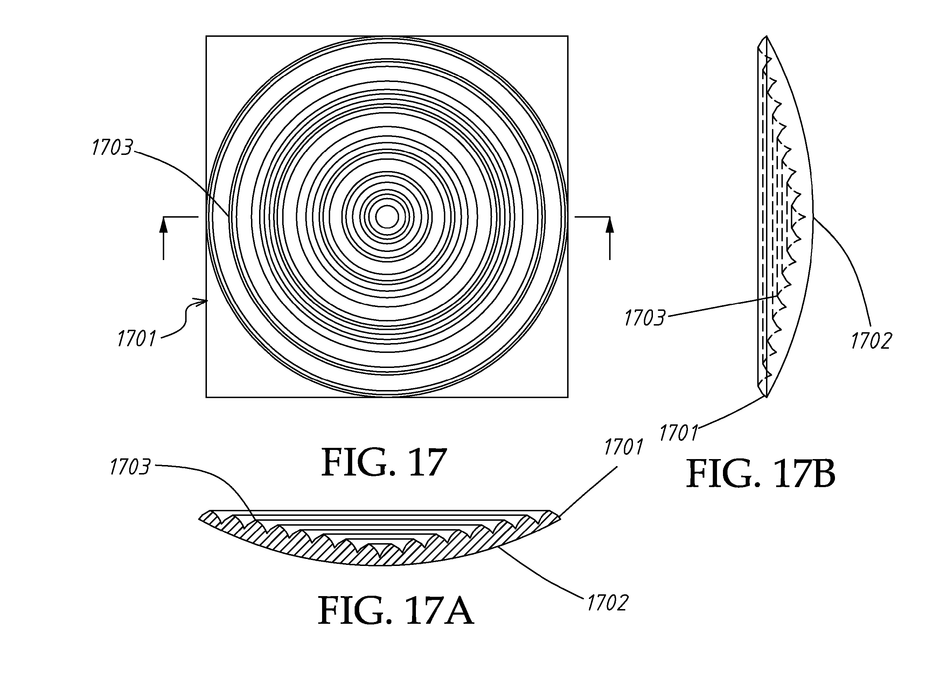

Referring to Figs. 17, 17A and 17B which are plane views of a fifth embodiment of light distribution board having an improved light grating structure with a plurality of light gratings each having multiple focuses of the present invention, in the drawings, a bottom surface **1702** of a transparent board **1701** is an arciform surface, and a top surface of the transparent board **1701** is formed thereon a plurality of annular light gratings **1703** each having multiple focuses. These annular light gratings **1703** having multiple focuses are arranged in steps. The curvature and inclination angle of each convex lens of the annular light gratings **1703** having multiple focuses and the inclination angle of each of the aforesaid lenses with a non-arciform surface are changed in pursuance of the angles of refraction of the incident light beams through the lens surfaces.

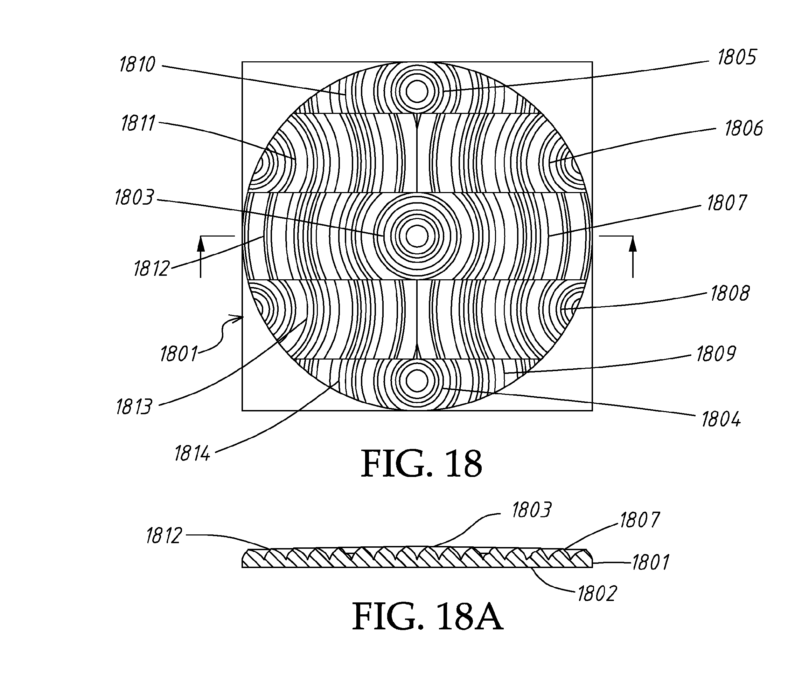

Referring to Figs. 18 and 18A which are plane views of a sixth embodiment of light distribution board having an improved light grating structure with a plurality of light gratings each having multiple focuses of the present invention, in the drawings, a bottom surface **1802** of a transparent board **1801** is a plane surface, and a top surface of the transparent board **1801** is formed thereon a plurality of non-concentric annular light gratings **1803, 1804** and **1805** all having multiple focuses and a plurality of partially annular light gratings **1806, 1807, 1808, 1809, 1810, 1811, 1812, 1813** and **1814** all having multiple focuses. The curvature and inclination angle of each convex lens of the annular light gratings **1803** having multiple focuses and the inclination angle of each of the aforesaid lenses with a non-arciform surface are changed in pursuance of the angles of refraction of the incident light beams through the lens surfaces.

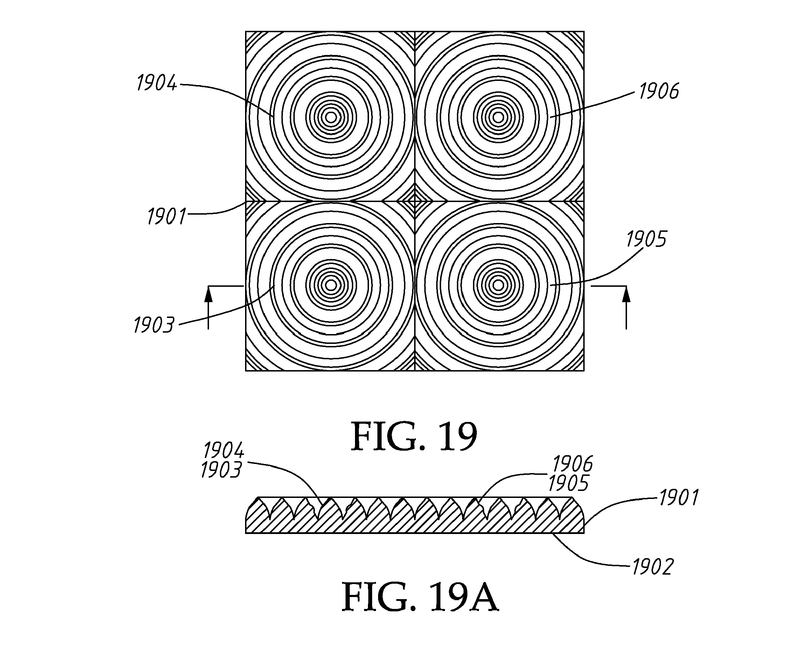

Referring to Figs. 19 and 19A which are plane views of a seventh embodiment of light distribution board having an improved light grating structure with a plurality of light gratings each having multiple focuses of the present invention, in the drawings, a bottom surface **1902** of a transparent board **1901** is a plane surface, and a top surface of the transparent board **1901** is thereon a plurality of non-concentric annular light gratings **1903, 1904, 1905** and **1906** all having multiple focuses. The curvature and inclination angle of each convex lens of the annular light gratings **1803** having multiple focuses and the inclination angle of each of the aforesaid lenses with a non-arciform surface are changed in pursuance of the angles of refraction of the incident light beams through the lens surfaces.

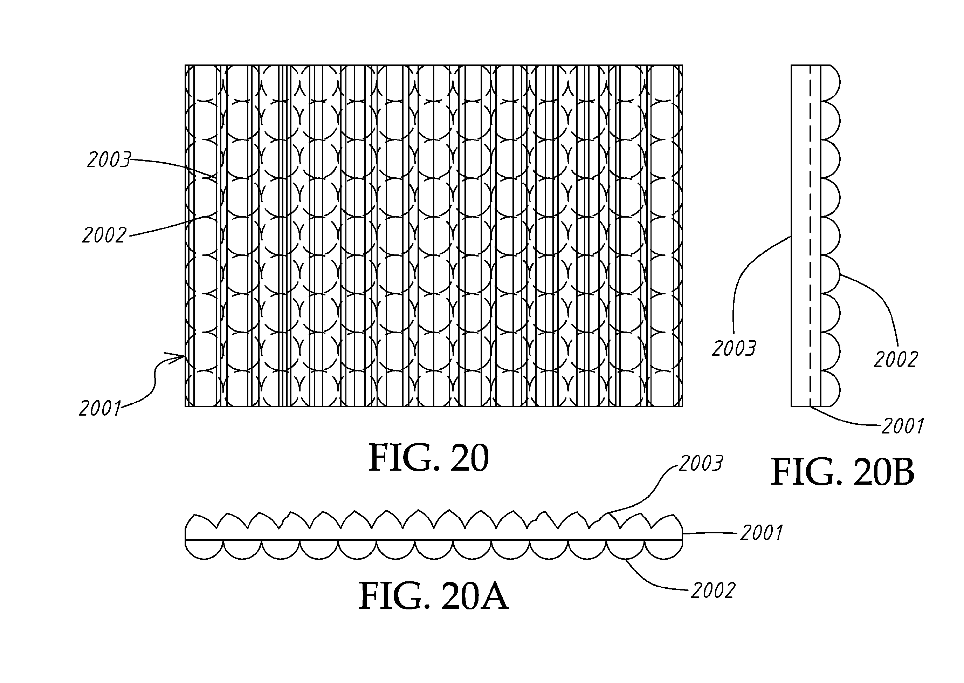

Referring to Figs. 20, 20A and 20B which are plane views of an eighth embodiment of light distribution board having an improved light grating structure with a plurality of light gratings each having multiple focuses of the present invention, in the drawings, a bottom surface of a transparent board **2001** is formed thereon a plurality of normal convex lenses **2002,** and a top surface of the transparent board **2001** is formed thereon a plurality of strip like light gratings **2003** each having multiple focuses. The curvature and inclination angle of each convex lens of the strip like light gratings **2003** having multiple focuses and the inclination angle of each of the aforesaid lenses with a non-arciform surface are changed in pursuance of the angles of refraction of the incident light beams through the lens surfaces. The principle of designing the curvatures of the normal convex lenses **2002** is same as that stated for Fig. 3.

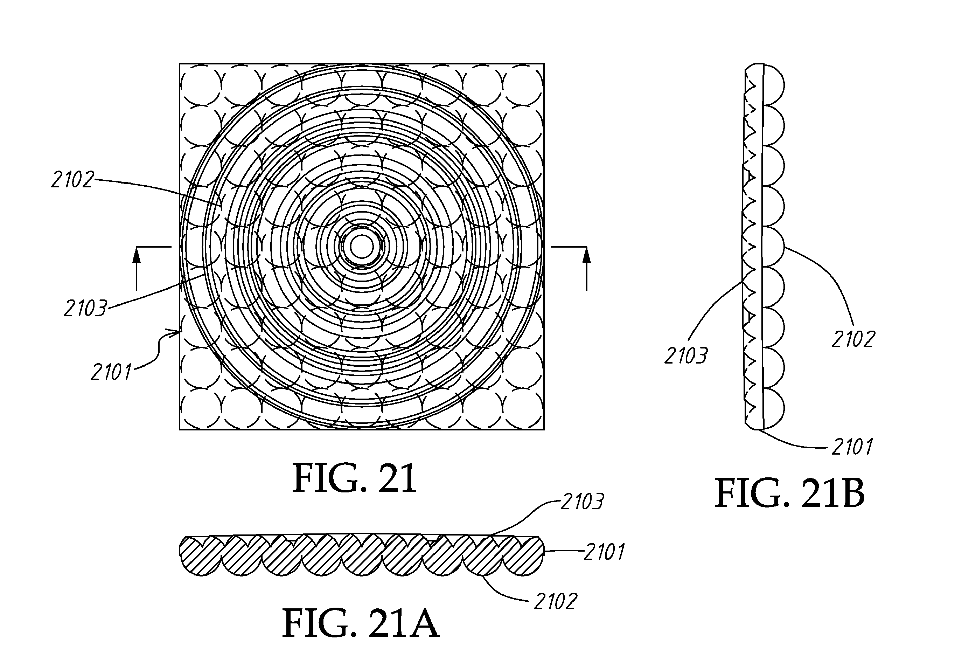

Referring to Figs. 21, 21A and 21B which are plane views of a ninth embodiment of light distribution board having an improved light grating structure with a plurality of light gratings each having multiple focuses of the present invention, in the drawings, a bottom surface of a transparent board **2101** is formed thereon a plurality of normal convex lenses **2102,** and a top surface of the transparent board **2101** is formed thereon a plurality of annular light gratings **2103** each having multiple focuses. The curvature and inclination angle of each convex lens of the annular light gratings **2103** having multiple focuses and the inclination angle of each of the aforesaid lenses with a non-arciform surface are changed in pursuance of the angles of refraction of the incident light beams through the lens surfaces. The principle of designing the curvatures of the normal convex lenses **2102** is same as that stated for Fig. 3.

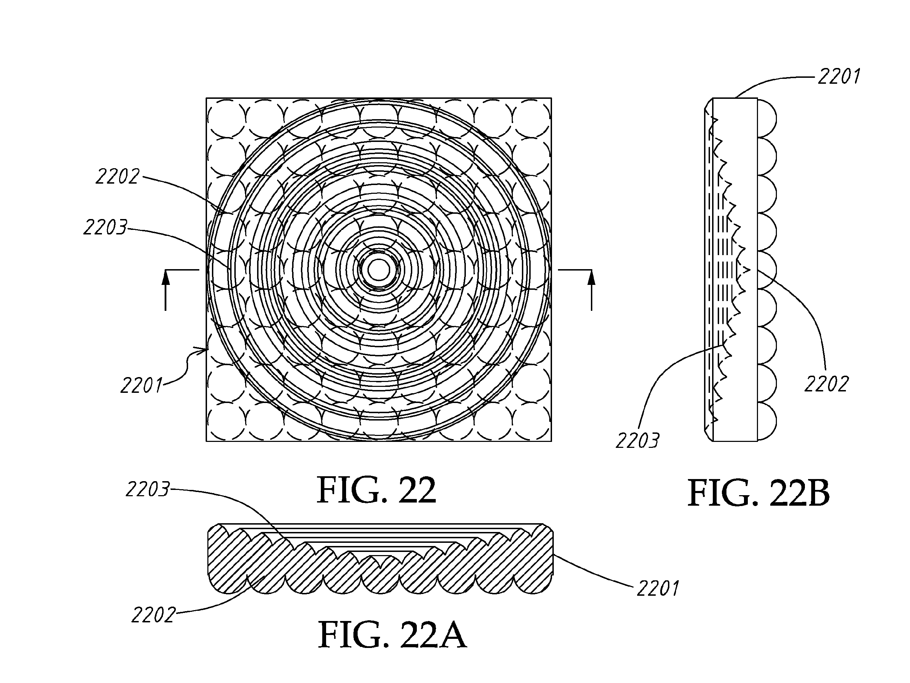

Referring to Figs. 22, 22A and 22B which are plane views of a tenth embodiment of light distribution board having an improved light grating structure with a plurality of light gratings each having multiple focuses of the present invention, in the drawings, a bottom surface of a transparent board **2201** is formed thereon a plurality of normal convex lenses **2202,** and a top surface of the transparent board **2201** is formed thereon a plurality of annular light gratings **2203** each having multiple focuses. These annular light gratings **2203** having multiple focuses are arranged in steps. The curvature and inclination angle of each convex lens of the annular light gratings **2203** having multiple focuses and the inclination angle of each of the aforesaid lenses with a non-arciform surface are changed in pursuance of the angles of refraction of the incident light beams through the lens surfaces. The principle of designing the curvatures of the normal convex lenses **2202** is same as that stated for Fig. 3.

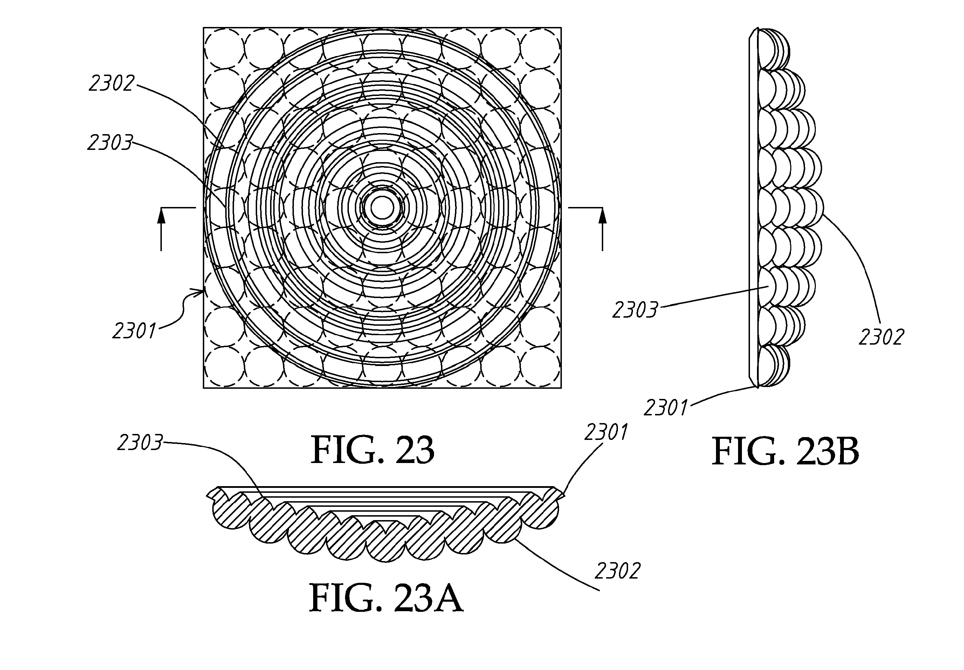

Referring to Figs. 23, 23A and 23B which are plane views of an eleventh embodiment of light distribution board having an improved light grating structure with a plurality of light gratings each having multiple focuses of the present invention, in the drawings, a bottom surface of a transparent board **2301** is formed thereon a plurality of normal convex lenses **2302,** and a top surface of the transparent board **2301** is formed thereon a plurality of annular light gratings **2303** each having multiple focuses. These annular light gratings **2303** having multiple focuses are arranged in steps. The curvature and inclination angle of each convex lens of the annular light gratings **2303** having multiple focuses and the inclination angle of each of the aforesaid lenses with a non-arciform surface are changed in pursuance of the angles of refraction of the incident light beams through the lens surfaces. The principle of designing the curvatures of the normal convex lenses **2302** is same as that stated for Fig. 3.

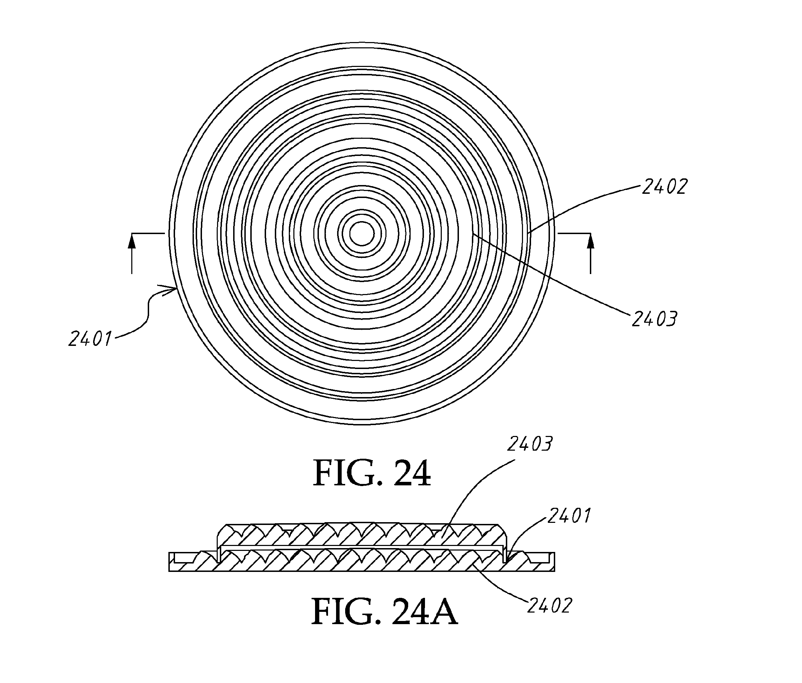

Referring to Figs. 24, and 24A which are plane views of a twelfth embodiment of light distribution board having an improved light grating structure with a plurality of light gratings each having multiple focuses of the present invention, in the drawings, there is a two-layer light distribution board **2401** composed of two transparent boards **2402, 2403** of which one overlaps the other, each of the two transparent boards **2402, 2403** can be as any of the above eleven kinds of embodiments of light distribution boards.
In the drawings, the two transparent boards **2402, 2403** as shown here are both the transparent boards for the annular light gratings having multiple focuses as stated in the second embodiment, with such a structure, light beams can get maximum angles of refraction after many times of refraction.

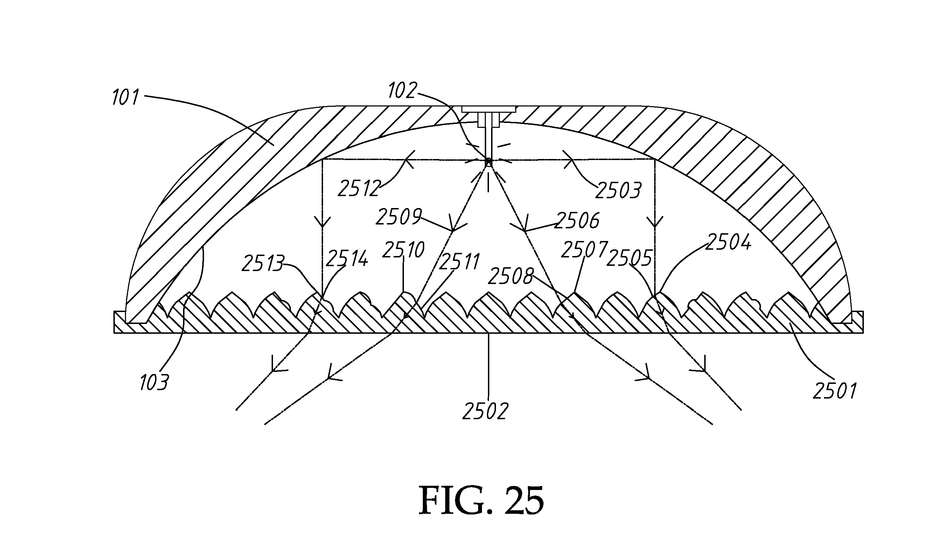

Referring to Fig. 25 which shows an embodiment of the present invention, of which at least a side of at least a transparent board is used to form a light distribution board with a plurality of light gratings each having multiple focuses and is applied to a lamp, in which a light distribution board randomly chosen from any of the above first to eleventh embodiments is movably mounted at a district to be illuminated below the conventional half covering type obscured cover **101;** in this drawing, a light distribution board **2501** as that of the second embodiment of the present invention is used for an example, a top surface of the light distribution board **2501** is formed thereon a plurality of annular light gratings each having multiple focuses and faces to a light source **102** being a light receiving surface, a bottom surface **2502** of the light distribution board **2501** is a plane surface as a light outputting surface.

When a light beam **2506** enters a convex lens **2508** of the light distribution board **2507** to create a first time refraction, and when the light beam **2506** reaches the plane surface **2502,** it is once more refracted down and rightwards toward a district to be illuminated. A light beam **2509** enters a convex lens **2511** of a light grating **2510** of the light distribution board **2501** to create a first time refraction, and when the light beam **2509** reaches the plane surface **2502,** it is once more refracted down and leftwards and enters the district to be illuminated. A light beam **2503** enters a convex lens **2505** of a light grating **2504** of the light distribution board **2501** after being reflected by a reflective surface **103** to create a first time refraction, and when the light beam **2503** reaches the plane surface **2502,** it is once more refracted down and rightwards and enters the district to be illuminated. A light beam **2512** enters a convex lens **2514** of a light grating **2513** of the light distribution board **2501** after being reflected by the reflective surface **103** to create a first time refraction, and when the light beam **2512** reaches the plane surface **2502,** it is once more refracted down and leftwards and enters the district to be illuminated. The light distribution board **2501** definitely can control illumination of a specific district to be illuminated by most of the light beams from the lamp, and the effects of having a wider illuminated range and uniform distribution of brightness of light beams at the district to be illuminated can thus be obtained, and an effect of saving energy can thus be achieved.

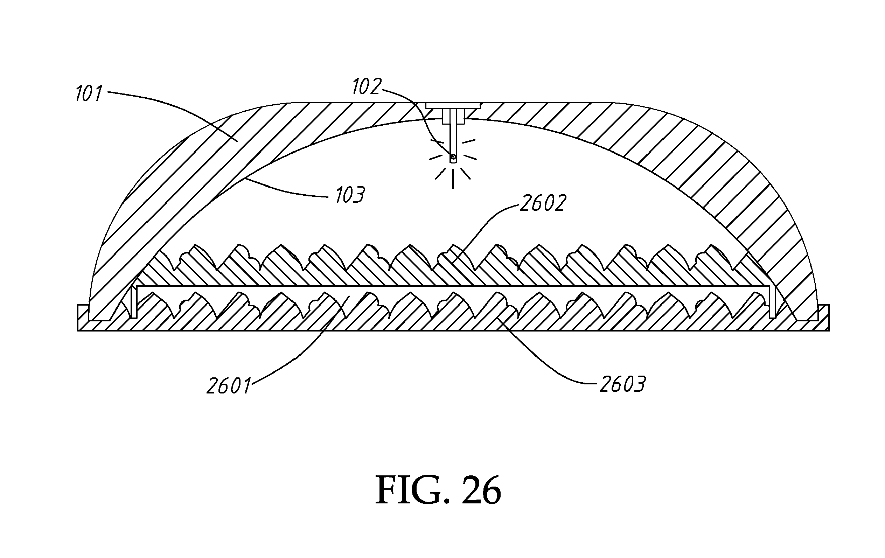

Referring to Fig. 26 which shows another embodiment of the present invention, of which at least a side of at least a transparent board is used to form a light distribution board with a plurality of light gratings each having multiple focuses and is applied to a lamp, in which a light distribution board **2601** chosen from the above twelfth embodiment is movably mounted at a district to be illuminated below the conventional half covering type obscured cover **101;** in this drawing, the light distribution board **2601** is formed from two transparent boards **2602, 2603** of which one overlaps the other.

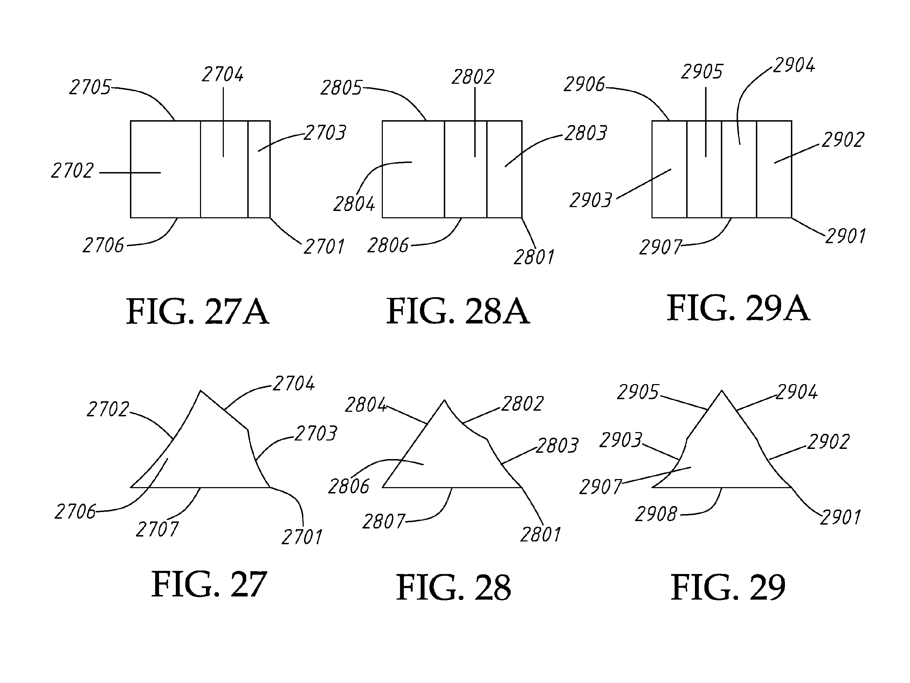

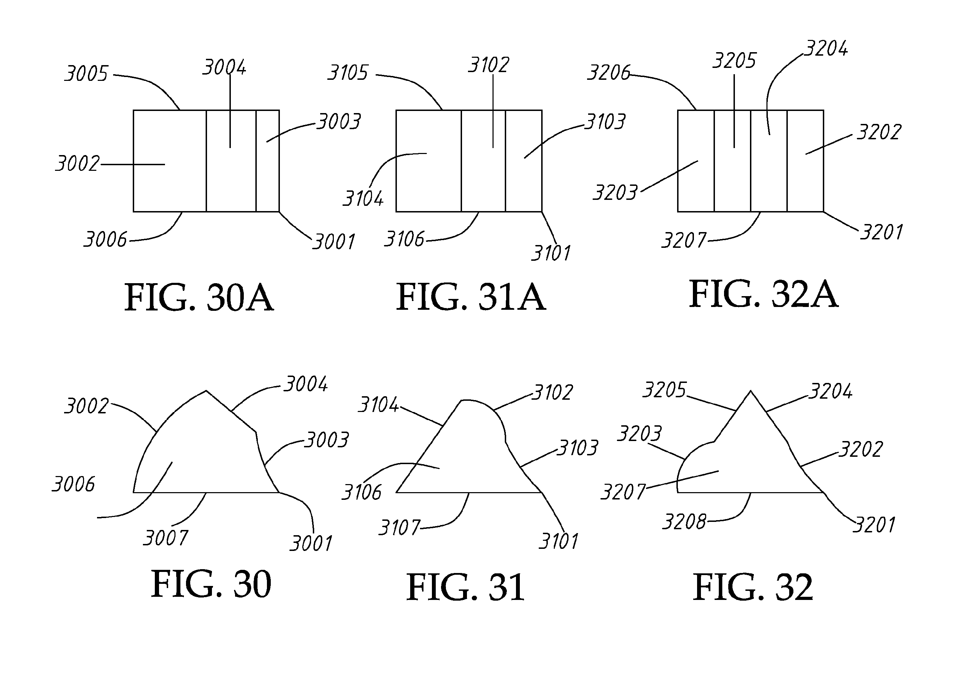

The light gratings having multiple focuses in strip, annular, cloud or granular shapes formed from the transparent boards of the present invention can also be chosen from the above various structures:
1. Referring to Figs. 27 and 27A, in the drawings, a light grating **2701** having multiple focuses is composed of two concave lenses **2702** and **2703** and a lens with a non-arciform surface **2704,** and there are two surfaces **2705, 2706** which are vertical surfaces of the front and the rear sides respectively of the light grating **2701** which is strip like, cloud shaped or annular, and a bottom surface **2707** of the light grating **2701** having multiple focuses is a plane surface.
2. Referring to Figs. 28 and 28A, in the drawings, a light grating **2801** having multiple focuses is composed of two concave lenses **2802,** and **2803** and a lens with a non-arciform surface **2804,** and there are two surfaces **2805** and **2806** which are vertical surfaces of the front and the rear sides respectively of the light grating **2801** which is strip like, cloud shaped or annular, and a bottom surface **2807** of the light grating **2801** having multiple focuses is a plane surface.
3. Referring to Figs. 29 and 29A, in the drawings, a light grating **2901** having multiple focuses is composed of two concave lenses **2902** and **2903** and two lenses each with a non-arciform surface **2904, 2905** and there are two surfaces **2906, 2907** which are vertical surfaces of the front and the rear sides respectively of the light grating **2901** which is strip like, cloud shaped or annular, and a bottom surface **2908** of the light grating **2901** having multiple focuses is a plane surface.
4. Referring to Figs. 30 and 30A, in the drawings, a light grating **3001** having multiple focuses is composed of a convex lens **3002,** a concave lens **3003** and a lens with a non-arciform surface **3004,** and there are two surfaces **3005, 3006** which are vertical surfaces of the front and the rear sides respectively of the light grating **3001** which is strip like, cloud shaped or annular, and a bottom surface **3007** of the light grating **3001** having multiple focuses is a plane surface.
5. Referring to Figs. 31 and 31A, in the drawings, a light grating **3101** having multiple focuses is composed of a convex lens **3102,** a concave lens **3103** and a lens with a non-arciform surface **3104,** and there are two surfaces **3105, 3106** which are vertical surfaces of the front and the rear sides respectively of the light grating **3101** which is strip like, cloud shaped or annular, and a bottom surface **3107** of the light grating **3101** having multiple focuses is a plane surface.
6. Referring to Figs. 32 and 32A, in the drawings, a light grating **3201** having multiple focuses is composed of a convex lens **3203,** a concave lens **3202** and two lenses each with a non-arciform surface **3204, 3205,** and there are two surfaces **3206, 3207** which are vertical surfaces of the front and the rear sides respectively of the light grating **3201** which is strip like, cloud shaped or annular, and a bottom surface **3208** of the light grating **3201** having multiple focuses is a plane surface.

According to the above list many kinds of embodiments, the light distribution boards of the present invention can be used respectively for a light outputting surface of a conventional lamp in lieu of a conventional lamp shade, thus a lamp set with a light distribution board of the present invention can be formed.

In conclusion, by specifically designing on light gratings, the light distribution boards of the present invention can get the expected effects thereof. Having thus described my invention, what I claim as new and desire to be secured by Letters Patent of the United States is:

## Claims

1. A light distribution board having an improved light grating structure including a plurality of light gratings each with multiple focuses, said light distribution board is used on a light outputting surface of a lamp to control refraction angular directions of light beams of said lamp, so that said light beams irradiate a district to be illuminated to get an effect of uniformly distributing, said lamp includes an obscured lamp shade, at least a reflective surface and at least a light source; said light distribution board having a plurality of light gratings each with multiple focuses includes at least a transparent board formed on at least one side thereof a plurality of light gratings each having multiple focuses, said light distribution board is
**characterized in that**:
each of said light gratings having multiple focuses is composed of two or more arciform (concave or convex) lenses and at least one lens with a non- arciform surface to form a light grating having at least two focuses, curvature and inclination angle of each of said arciform (concave or convex) lenses forming said light grating having multiple focuses are changed in pursuance of angles of refraction of incident light beams through surfaces of said (concave or convex) lenses.

2. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are strip like light gratings; said top surface is a light receiving surface of said lamp, a bottom surface of said transparent board is a plane surface and is an illuminating surface of said lamp.

3. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are annular light gratings; said top surface is a light receiving surface of said lamp, a bottom surface of said transparent board is a plane surface and is an illuminating surface of said lamp.

4. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are cloud shaped light gratings; said top surface is a light receiving surface of said lamp, a bottom surface of said transparent board is a plane surface and is an illuminating surface of said lamp.

5. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are non-concentric annular light gratings; said top surface is a light receiving surface of said lamp, a bottom surface of said transparent board is a plane surface and is an illuminating surface of said lamp.

6. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are composed of a plurality of non-concentric annular light gratings and a plurality of partially annular light gratings; said top surface is a light receiving surface of said lamp, a bottom surface of said transparent board is a plane surface and is an illuminating surface of said lamp.

7. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are composed of a plurality of non-concentric and partially annular light gratings; said top surface is a light receiving surface of said lamp, a bottom surface of said transparent board is a plane surface and is an illuminating surface of said lamp.

8. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are strip like gratings; said top surface is a light receiving surface of said lamp, a bottom surface of said transparent board is formed thereon a plurality of normal convex lenses and is an illuminating surface of said lamp.

9. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are annular light gratings; said top surface is a light receiving surface of said lamp, a bottom surface of said transparent board is formed thereon a plurality of normal convex lenses and is an illuminating surface of said lamp.

10. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are annular light gratings arranged in steps; said top surface is a light receiving surface of said lamp, a bottom surface of said transparent board is a plane surface and is an illuminating surface of said lamp.

11. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are annular light gratings arranged in steps; said top surface is a light receiving surface of said lamp, a bottom surface of said transparent board is an arciform surface and is an illuminating surface of said lamp.

12. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are annular light gratings arranged in steps; said top surface is a light receiving surface of said lamp, a bottom surface of said transparent board is formed thereon a plurality of normal convex lenses and is an illuminating surface of said lamp.

13. The light distribution board having an improved light grating structure including a plurality of light gratings each with multiple focuses as in claim 1, wherein: said transparent board is provided on its top surface with a plurality of light gratings each having multiple focuses, said light gratings with multiple focuses are annular light gratings arranged in steps; said top surface is a light receiving surface of said lamp, a bottom surface of said transparent board is formed thereon a plurality of normal convex lenses arranged in annular shapes and is an illuminating surface of said lamp.

14. The light distribution board having an improved light grating structure including a plurality of light gratings each with multiple focuses as in claim 1, wherein: said transparent board is in a shape chosen from rectangular, circle, elliptical and strange shapes.

15. The light distribution board having an improved light grating structure including a plurality of light gratings each with multiple focuses as in claim 1, wherein: material for said transparent board is chosen from transparent plastics and transparent glass.

16. The light distribution board having an improved light grating structure including a plurality of light gratings each with multiple focuses as in claim 1, wherein: amount of said at least a transparent board is two which mutually overlap; and of which an upper transparent board is provided on its top surface with a plurality of light gratings each having multiple focuses, said top surface is a light receiving surface of said lamp, and a bottom surface of said upper transparent board is a plane surface; and of which a lower transparent board is provided on its top surface with a plurality of light gratings each having multiple focuses, said top surface is a light receiving surface of said lamp, and a bottom surface of said lower transparent board is a plane surface or is formed thereon a plurality of normal convex lenses and is an illuminating surface of said lamp.

17. The light distribution board having an improved light grating structure including a plurality of light gratings each with multiple focuses as in claim 1, wherein: said two or more arciform (concave or convex) lenses of each of said light gratings are convex lenses.

18. The light distribution board having an improved light grating structure including a plurality of light gratings each with multiple focuses as in claim 1, wherein: said two or more arciform (concave or convex) lenses of each of said light gratings are concave lenses.

19. The light distribution board having an improved light grating structure including a plurality of light gratings each with multiple focuses as in claim 1, wherein: said two or more arciform (concave or convex) lenses of each of said light gratings are partial convex lenses and partial concave lenses.
